(19) Europäisches Patentamt
European Patent Office
Office européen des brevets

(11) Veröffentlichungsnummer: **0 480 251 A1**

(12) # EUROPÄISCHE PATENTANMELDUNG

(21) Anmeldenummer: **91116394.7**

(22) Anmeldetag: **26.09.91**

(51) Int. Cl.[5]: **C09D 175/14**, C08F 2/46

(30) Priorität: **06.10.90 DE 4031732**

(43) Veröffentlichungstag der Anmeldung:
**15.04.92 Patentblatt 92/16**

(84) Benannte Vertragsstaaten:
**AT BE CH DE DK ES FR GB IT LI NL SE**

(71) Anmelder: **BASF Aktiengesellschaft**
**Carl-Bosch-Strasse 38**
**W-6700 Ludwigshafen(DE)**

(72) Erfinder: **Beck, Erich, Dr.**
**Konrad-Adenauer-Strasse 15**
**W-6721 Harthausen(DE)**
Erfinder: **Renz, Hans, Dr.**
**Gartenstrasse 45**
**W-6701 Meckenheim(DE)**
Erfinder: **Haeberle, Karl, Dr.**
**Deidesheimer Strasse 3**
**W-6730 Neustadt(DE)**
Erfinder: **Licht, Ulrike, Dr.**
**O 4,9,**
**W-6800 Mannheim 1(DE)**
Erfinder: **Keil, Edmund**
**Kranichstrasse 9**
**W-6700 Ludwigshafen(DE)**
Erfinder: **Lokai, Matthias**
**Gruenstadter Strasse 11**
**W-6753 Enkenbach-Alsenborn(DE)**

(54) **Strahlenhärtbare, wässrige Bindemitteldispersionen.**

(57) Strahlungshärtbare, wäßrige Bindemitteldispersionen, enthaltend als Bindemittelkomponenten

(A) 5 bis 95 Gew.-%, bezogen auf die Gesamtmenge der Komponenten (A), (B) und (C) eines in Wasser dispergierten Polyurethans, welches einen K-Wert größer 40 (gemessen in Dimethylformamid) hat oder in Dimethylformamid nicht löslich ist und einen Gehalt an polymerisierbaren ethylenisch ungesättigten Gruppen von maximal 0,2 mol pro 100 g Polyurethan aufweist, und

(B) 5 bis 95 Gew.-%, bezogen auf die Gesamtmenge der Komponenten (A), (B) und (C) eines in Wasser dispergierten Präpolymeren oder Präpolymerengemischs mit einem Gehalt von 0,1 bis 1,0 mol polymerisierbarer ethylenisch ungesättigter Gruppen pro 100 g Präpolymer oder Präpolymerengemisch und einem Molekulargewicht von 300 bis 10 000, wobei der K-Wert (gemessen in Dimethylformamid) kleiner 40 ist, und

(C) 0 bis 30 Gew.-%, bezogen auf die gesamtmenge der Komponenten (A), (B) und (C), eines Schutzkolloids.

EP 0 480 251 A1

Die Erfindung betrifft strahlungshärtbare, wäßrige Bindemitteldispersionen, enthaltend

(A) 5 bis 95 Gew.-%, bezogen auf die Gesamtmenge der Komponenten (A), (B) und (C) eines in Wasser dispergierten Polyurethans, welches einen K-Wert größer 40 (gemessen in Dimethylformamid) hat oder in Dimethylformamid nicht löslich ist und einen Gehalt an polymerisierbaren ethylenisch ungesättigten Gruppen von maximal 0,2 mol pro 100 g Polyurethan aufweist, und

(B) 5 bis 95 Gew.-%, bezogen auf die Gesamtmenge der Komponenten (A), (B) und (C) eines in Wasser dispergierten Präpolymeren oder Präpolymerengemischs mit einem Gehalt von 0,1 bis 1,0 mol polymerisierbarer ethylenisch ungesättigter Gruppen pro 100 g Präpolymer oder Präpolymerengemisch und einem Molekulargewicht von 300 bis 10 000, wobei der K-Wert (gemessen in Dimethylformamid) kleiner 40 ist, und

(C) 0 bis 30 Gew.-%, bezogen auf die Gesamtmenge der Komponenten (A), (B) und (C), eines Schutzkolloids.

Strahlungshärtbare, wäßrige Bindemitteldispersionen von Polyurethanen, Polyestern, Polyethern und anderen Präpolymeren sind, z.B. aus der DE-A-28 53 921, bekannt. In der DE-A-34 37 918 sind wäßrige Polyurethanacrylatdispersionen beschrieben, in denen die Polyurethanacrylate eine Doppelbindungszahl von 2,5 bis 15 g Brom pro 100 g Polyurethanacrylat (≙ 0,016 bis 0,09 mol Brom, bzw. mol Doppelbindungen pro 100 g Polyurethanacrylat) aufweisen. Die mit diesen Dispersionen hergestellten Beschichtungen sind durch gute elastische Eigenschaften gekennzeichnet. Aufgrund der geringen Anzahl der Doppelbindungen und der damit verbundenen geringen Vernetzungsdichte ist die Härte dieser Beschichtungen jedoch ungenügend.

Aufgabe der vorliegenden Erfindung waren daher wäßrige, strahlungshärtbare Bindemitteldispersionen, die Beschichtungen mit sehr guter Elastizität und großer Härte ergeben. Gleichzeitig sollen die Beschichtungen auf Substratoberflächen gut haften und eine gute Lösemittel- und Chemikalienbeständigkeit aufweisen.

Demgemäß wurden die wäßrigen, strahlungshärtbaren Bindemitteldispersionen gemäß Anspruch 1 gefunden.

Die weiteren Ausführungen betreffen die einzelnen Komponenten der Bindemitteldispersionen sowie ihre Verwendung zur Beschichtung von Oberflächen.

Geeignete Polyurethane (A) werden erhalten durch Umsetzung von Polyisocyanaten mit Polyaminen oder Polyolen als Kettenverlängerer, gegebenenfalls mit monofunktionellen Alkohol- oder Aminverbindungen und gegebenenfalls mit Verbindungen mit mindestens einer ethylenisch ungesättigten Gruppe und mindestens einer gegenüber Isocyanat reaktiven Hydroxyl- oder Aminogruppe.

Insbesondere werden bei der Herstellung des Polyurethans, bezogen auf

a) 1 Grammäquivalent NCO eines Polyisocyanats

folgende Grammäquivalentmengen von Verbindungen mit einer oder mehreren gegenüber Isocyanat reaktiven Gruppen eingesetzt:

b) 0,1 - 0,8 Grammäquivalente OH eines Polyols mit einem Molekulargewicht zwischen 400 und 6000 g/mol

c) 0 - 0,8 Grammäquivalente OH eines Polyols mit einem Molekulargewicht zwischen 62 und 399 g/mol

d) 0 - 0,4 Grammäquivalente NH eines Polyamins mit mindestens zwei gegenüber Isocyanat reaktiven Aminogruppen

e) 0 - 0,4 Grammäquivalente OH eines Aminoalkohols mit einer gegenüber Isocyanat reaktiven Aminogruppe

f) 0 - 0,5 bevorzugt 0,05 - 0,5 Grammäquivalente OH oder NH einer Verbindung mit ionische Gruppen oder in Ionengruppen überführbaren Gruppen mit mindestens einer gegenüber Isocyanat reaktiven Hydroxyl- oder Aminogruppe,

g) 0 - 0,2 Grammäquivalente OH oder NH von monofunktionellen Amin- oder Hydroxylverbindungen

und gegebenenfalls

h) soviel Grammäquivalente OH einer Verbindung mit mindestens einer ethylenisch ungesättigten Gruppe, daß im Polyurethan maximal 0,2 mol polymerisierbarer ethylenisch ungesättigter Gruppen ( $>C=C<$ Gruppen) pro 100 g des Polyurethans vorhanden sind,

wobei die Summe der Grammäquivalente der gegenüber Isocyanat reaktiven Amino- und Hydroxylgruppen im allgemeinen 0,9 bis 1,1, insbesondere 0,95 bis 1,05 beträgt.

Bevorzugt beträgt der Gehalt an polymerisierbaren ethylenisch ungesättigten Gruppen im Polyurethan 0,01 bis 0,2, besonders bevorzugt 0,02 bis 0,08 mol pro 100 g des Polyurethans.

Das Polyurethan hat einen K-Wert (nach Fikentscher, Cellulose-Chemie 13, 58 (1932)) gemessen in Dimethylformamid bei 25 °C von mehr als 40 oder ist bei 25 °C in Dimethylformamid, z.B. aufgrund seines besonders hohen Molekulargewichts oder weil es sich um ein vernetztes Polyurethan handelt, unlöslich, so daß ein K-Wert nicht mehr bestimmt werden kann.

Zu den Aufbaukomponenten des ethylenisch ungesättigten Polyurethans ist folgendes zu bemerken:

Geeignete Polyisocyanate a) sind organische Verbindungen, die mindestens zwei freie Isocyanatgruppen aufweisen. Vorzugsweise werden Diisocyanate $X(NCO)_2$ eingesetzt, wobei X einen aliphatischen Kohlenwasserstoffrest mit 4 bis 12 Kohlenstoffatomen, einen cycloaliphatischen Kohlenwasserstoffrest mit 6 bis 15 Kohlenwasserstoffatomen, einen aromatischen Kohlenwasserstoffrest mit 6 bis 15 Kohlenwasserstoffatomen oder einen araliphatischen Kohlenwasserstoffrest mit 7 bis 15 Kohlenstoffatomen bedeutet. Beispiele derartiger Diisocyanate sind Tetramethylendiisocyanat, Hexamethylendiisocyanat, Dodecamethylendiisocyanat, 1,4-Diisocyanato-cyclohexan, 1-Isocyanato-3,5,5-trimethyl-5-isocyanatomethylcyclohexan, 4,4'-Diisocyanato-dicyclohexyl-methan, 4,4'-Diisocyanato-dicyclohexylpropan-(2,2), 1,4-Diisocyanatobenzol, 2,4-Diisocyanato-toluol, 2,6-Diisocyanatotoluol, 4,4'-Diisocyanato-diphenylmethan, p-Xylylendiisocyanat, sowie aus diesen Verbindungen bestehende Gemische, wie besonders Gemische aus aliphatischen bzw. cycloaliphatischen und aromatischen Diisocyanaten im Molverhältnis 1 : 4 bis 5 1. Es ist auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig mitzuverwenden.

Bei den Polyolen b) des Molekulargewichtsbereiches zwischen 400 und 6000 g/mol, bevorzugt 800 bis 4000 g/mol, besonders bevorzugt 1400 bis 3000 g/mol, handelt es sich um Polyesterpolyole oder Polyetherpolyole.

Bei den Polyesterpolyolen handelt es sich insbesondere um die an sich bekannten Umsetzungsprodukte von mehrwertigen, vorzugsweise zweiwertigen und gegebenenfalls zusätzlich dreiwertigen Alkoholen mit mehrwertigen, vorzugsweise zweiwertigen Carbonsäuren. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, aromatisch oder heterocyclisch sein und gegebenenfalls, z.B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Als mehrwertige Alkohole kommen z.B. Ethylenglykol, Propylenglykol-(1,2) und -(1,3), Butandiol-(1,4), -(1,3) und -(2,3), Butendiol-(1,4), Butindiol-(1,4), Pentandiol-(1,5), Hexandiol-(1,6), Octandiol-(1,8), Neopentylglykol, Cyclohexandimethanol (1,4-Bis-hydroxymethyl-cyclohexan), 2-Methyl-1,3-propandiol, Pentandiol-(1,5), Glycerin, Trimethylolpropan, Hexantriol-(1,2,6), Butantriol-(1,2,4), Trimethylolethan, ferner Diethylenglykol, Triethylenglykol, Tetraethylenglykol, Polyethylenglykol, Dipropylenglykol, Polypropylenglykol, Dibutylenglykol und Polybutylenglykole in Frage.

Geeignet sind auch Polyesterpolyole auf Lacton-Basis, wobei es sich um Homo- oder Mischpolymerisate von Lactonen, bevorzugt um difunktionelle, endständige Hydroxylgruppen aufweisende Anlagerungsprodukte von Lactonen bzw. Lactongemischen, wie z.B. $\epsilon$-Caprolacton, $\beta$-Propiolacton, $\nu$-Butyrolacton und/oder Methyl-$\epsilon$-caprolacton an geeignete difunktionelle Startermoleküle, z.B. die vorstehend als Aufbaukomponente für die Polyesterpolyole genannten niedermolekularen, zweiwertigen Alkohole handelt. Die entsprechenden Polymerisate des $\epsilon$-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren eingesetzt werden.

Die - gegebenenfalls im Gemisch mit Polyesterpolyolen - einsetzbaren Polyetherpolyole, insbesondere -diole, sind insbesondere durch Polymerisation von Ethylenoxld, Propylenoxid, Butylenoxid, Tetrahydrofuran, Styroloxid oder Epichlorhydrin mit sich selbst, z.B. in Gegenwart von $BF_3$ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propylenglykol-(1,3) oder -(1,2), 4,4'-Dihydroxy-diphenylpropan, Anilin erhältlich.

Als Polyole c) mit einem Molekulargewicht zwischen 62 und 399 g/mol, eignen sich z.B. die entsprechenden unter b) aufgeführten, zur Herstellung der Polyesterpolyole geeigneten Diole und Triole, sowie höher als trifunktionelle Alkohole wie Pentaerythrit oder Sorbit.

Bei den gegebenenfalls einzusetzenden Komponenten d) handelt es sich um mindestens difunktionelle Amin-Kettenverlängerer bzw. Vernetzer des Molgewichtsbereiches von 32 bis 500 g/mol, vorzugsweise von 60 bis 300 g/mol, ohne tertiäre Aminogruppen. Beispiele hierfür sind Diamine, wie Ethylendiamin, Hexamethylendiamin, Piperazin, 2,5-Dimethylpiperazin, 1-Amino-3-aminomethyl-3,5,5-trimethyl-cyclohexan (Isophorondiamin, IPDA), 4,4'-Diaminodicyclohexylmethan, 1,4-Diamino-cyclohexan, 1,2-Diamino-propan, Hydrazin,

Hydrazinhydrat oder Triamine, wie Diethylentriamin. Sie können in Anteilen von 0 bis 2,0 Mol/Mol Komponente b) eingesetzt sein, insbesondere zur Kettenverlängerung von isocyanatgruppenhaltigen Prepolymeren vor oder insbesondere im Falle von Triaminen nach der Dispergierung in Wasser. Die aminogruppenhaltigen Kettenverlängerer können auch in blockierter Form, z.B. in Form der entsprechenden Ketimine (vgl. z.B. die CA-PS 1 129 128), Ketazine (vgl. etwa die US-PSen 4 269 748 und 4 269 748) oder Aminsalze (s. US-PS 4 292 226) eingesetzt sein. Auch Oxazolidine, wie sie beispielsweise gemäß den US-PSen 4 192 937 und 4 192 937 vewendet werden, stellen verkappte Diamine dar, die für die Herstellung der erfindungsgemäßen Polyurethan-Dispersionen zur Kettenverlängerung der Isocyanat-Prepolymeren eingesetzt werden können. Bei der Verwendung derartiger verkappter Diamine werden diese im allgemeinen mit den Isocyanat-Prepolymeren in Abwesenheit von Wasser vermischt und diese Mischung anschließend mit dem Dispersionswasser oder einem Teil des Dispersionswassers vermischt, so daß intermediär hydrolytisch die entsprechenden Diamine freigesetzt werden.

Bei den gegebenenfalls einzusetzenden Komponenten e) handelt es sich um Aminoalkohole wie Ethanolamin, Isopropanolamin, Methylethanolamin oder Aminoethoxyethanol.

Als Aufbaukomponenten f) werden Verbindungen eingesetzt, die mindestens eine, vorzugsweise zwei gegenüber Isocyanatgruppen reaktionsfähige Gruppen und außerdem ionische Gruppen oder durch eine einfache Neutralisations- oder Quaternierungsreaktion in ionische Gruppen überführbare potentiell ionische Gruppe aufweisen. Durch Einführung der Aufbaukomponenten f) werden die Polyurethane selbst dispergierbar, d.h. beim Dispergieren in Wasser werden in diesem Fall keine Dispergierhilfsmittel (Schutzkolloid oder Emulgatoren) mehr benötigt. Die Einführung der kationischen und anionischen Gruppen erfolgt durch Mitverwendung von (potentielle) kationische Gruppen aufweisenden Verbindungen mit gegenüber Isocyanatgruppen reaktionsfähigen Wasserstoffatomen oder (potentielle) anionische Gruppen aufweisenden Verbindungen mit gegenüber Isocyanatgruppen reaktionsfähigen Wasserstoffatomen. Zu dieser Gruppe von Verbindungen gehören beispielsweise tertiäre Stickstoffatome aufweisende Polyether mit vorzugsweise zwei endständigen Hydroxylgruppen, wie sie beispielsweise durch Alkoxylierung von zwei an Aminstickstoff gebundene Wasserstoffatome aufweisenden Aminen, z.B. N-Methylamin, Anilin oder N,N'-Dimethylhydrazin, in an sich üblicher Weise zugänglich sind. Derartige Polyether weisen im allgemeinen ein zwischen 500 und 6000 g/mol liegendes Molekulargewicht auf. Vorzugsweise werden jedoch die ionischen Gruppen durch Mitverwendung von vergleichsweise niedermolekularen Verbindungen mit (potentiellen) ionischen Gruppen und gegenüber Isocyanatgruppen reaktionsfähigen Gruppen eingeführt. Beispielsweise hierfür sind in den US-PSen 3 479 310 und 4 056 564 sowie der GB-PS 1 455 554 aufgeführt. Auch Dihydroxyphosphonate, wie das Natriumsalz des 2,3-Dihydroxypropan-phosphonsäure-ethylesters oder das entsprechende Natriumsalz der nichtveresterten Phosphonsäure, können als ionische Aufbaukomponente mitverwendet werden.

Besonders bevorzugte (potentielle) ionische Aufbaukomponenten f) sind N-Alkyldialkanolamine, z.B. N-Methyldiethanolamin, N-Ethylendiethanolamin, Diaminosulfonate, wie das Na-Salz der N-(2-Aminoethyl)-2-aminoethansulfonsäure, Dihydroxysulfonate, Dihydroxycarbonsäuren, wie Dimethylolpropionsäure, Diaminocarbonsäuren bzw. -carboxylate, wie Lysin oder das Na-Salz der N-(2-Aminoethyl)-2-aminoethancarbonsäure und Diamine mit mindestens einem zusätzlichen tertiären Aminstickstoffatom, z.B. N-Methyl-bis-(3-aminopropyl)-amin.

Die überführung der gegebenenfalls zunächst in das Polyadditionsprodukt eingebauten potentiellen ionischen Gruppen zumindest teilweise in ionische Gruppen geschieht in an sich üblicher Weise durch Neutralisation der potentiellen anionischen und kationischen Gruppen oder durch Quarternierung von tertiären Amin-Stickstoffatomen.

Zur Neutralisation von potentiellen anionischen Gruppen, z.B. Carboxylgruppen, werden anorganische und/oder organische Basen eingesetzt wie Natriumhydroxid, Kaliumhydroxid, Kaliumcarbonat, Natriumhydrogencarbonat, Ammoniak oder primäre, sekundäre und besonders tertiäre Amine, z.B. Triethylamin oder Dimethylaminopropanol.

Zur überführung der potentiellen kationischen Gruppen, z.B. der tertiären Amingruppen in die entsprechenden Kationen, z.B. Ammoniumgruppen, sind als Neutralisationsmittel anorganische oder organische Säuren, z.B. Salzsäure, Essigsäure, Fumarsäure, Maleinsäure, Milchsäure, Weinsäure, Oxalsäure oder Phosphorsäure oder als Quarternierungsmittel, z.B. Methylchlorid, Methyljodid, Dimethylsulfat, Benzylchlorid, Chloressigsäureethylester oder Bromacetamid geeignet. Weitere geeignete Neutralisations- und Quarternierungsmittel sind z.B. in der US-PS 3 479 310, Spalte 6, beschrieben.

Diese Neutralisation oder Quarternisierung der potentiellen Ionengruppen kann vor, während, jedoch vorzugsweise nach der Isocyanat-Polyadditionsreaktion erfolgen.

Die Mengen der Aufbaukomponente f), bei potentiellen ionengruppenhaltigen Komponenten unter Berücksichtigung des Neutralisations- oder Quarternierungsgrades, ist geeigneterweise so zu wählen, daß die Polyurethane einen Gehalt von 0,05 bis 2 m Äqu/g Polyurethan, vorzugsweise von 0,07 bis 1,0 und besonders bevorzugt von 0,1 bis 0,7 m Äqu/g Polyurethan an ionischen Gruppen aufweisen.

Bei den gegebenenfalls mitzuverwendenden Komponenten g) handelt es sich bevorzugt um einwertige Polyetheralkohole des Molgewichtsbereiches 500 bis 10 000 g/mol, vorzugsweise von 1 000 bis 5 000 g/mol. Einwertige Polyetheralkohole sind durch Alkoxylierung von einwertigen Startermolekülen, wie beispielsweise Methanol, Ethanol oder n-Butanol erhältlich, wobei als Alkoxylierungsmittel Ethylenoxid oder Gemische von Ethylenoxid mit anderen Alkylenoxiden, besonders Propylenoxid eingesetzt werden. Im Falle der Verwendung von Alkylenoxidgemischen enthalten diese jedoch vorzugsweise mindestens 40, besonders bevorzugt mindestens 65 Mol-% Ethylenoxid.

Durch die Komponente g) können in den Polyurethanen somit gegebenenfalls in end- und/oder seitenständig angeordneten Polyetherketten vorliegende Polyethylenoxidsegmente eingebaut sein, die im Polyurethan neben den ionischen Gruppen den hydrophilen Charakter beeinflussen.

Die Verbindungen der genannten Art mit innerhalb von end- und/oder seitenständig angeordneten Polyetherketten vorliegenden Polyethylenoxideinheiten werden, so man von ihnen Gebrauch macht, in solchen Mengen eingesetzt, daß in den Polyurethan-Disperisonen von 0 bis 10, vorzugsweise 0 bis 5 Gew.%, innerhalb von end- und/oder seitenständig angeordneten Polyetherketten eingebauten Polyethylenoxideinheiten in den Polyurethanen vorliegen. Die Gesamtmenge der hydrophilen Struktureinheiten (ionische Gruppen und Ethylenoxideinheiten der zuletzt genannten Art) muß jedoch stets so gewählt werden, daß die Dispergierbarkeit der Polyurethane in Wasser gewährleistet ist.

Weitere Beispiele von bei der Herstellung der erfindungsgemäßen Dispersionen als Komponenten a) bis e) einsetzbaren Verbindungen sind z.B. in High Polymers, Vol. XVI, "Polyurethanes, Chemistry and Technology", von Saunders-Frisch, Interscience Publishers, New York, London, Band I, 1962, Seiten 32 bis 42 und Seiten 44 bis 54 und Band II, 1964, Seiten 5 bis 6 und 198 bis 199, beschrieben.

Als Verbindungen mit ethylenisch ungesättigten Gruppen h) kommen z.B. Ester von Acryl- oder Methacrylsäure mit Polyolen in Frage, wobei mindestens eine OH-Gruppe des Polyols unverestert bleibt. Besonders geeignet sind Hydroxyalkyl-(meth)acrylate $HO(CH_2)_nOOC(R^1)\ C = CH_2$ ($n = 2$ bis 8; $R^1 = H, CH_3$) und ihre Stellungsisomeren, Mono(Meth)acrylsäureester von Polyetherdiolen $HO(CHR^2CHR^3O)_mOC(R^1)\ C = CH_2$ ($R^1 = H, CH_3$; $R^2$, $R^3 = H, CH_3, C_2H_5$; $m = 2$ bis 20), Trimethylolpropanmono- und di(meth)acrylat, Pentaerythritdi- und tri (meth)acrylat oder Reaktionsprodukte von Epoxidverbindungen mit (Meth)-acrylsäure, wie sie z.B. in der US-A-357 221 genannt sind. Besonders geeignet für Beschichtungen mit großer Härte sind die Addukte von (Meth)-Acrylsäure mit Verbindungen der allgemeinen Formel

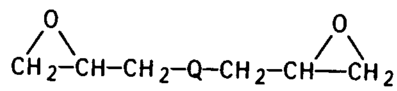

in der Q z.B. -O-, $(CH_2\text{-}CH_2\text{-}O\text{-})_n$ oder

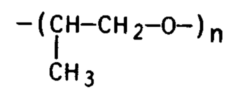

mit $n = 1 - 10$, $\text{-O-}(CH_2^-)_mO\text{-}$ mit $m = 1$ bis 8 bedeutet oder Q für einen Rest

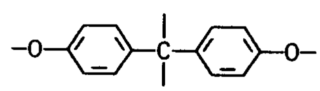

steht, wobei dieser Rest sich z.B. von 4,4'-Dihydroxydiphenylmethan, Bisphenol A, Bisphenol K oder kernsubstituierten oder hydrierten Derivaten dieser Verbindungen ableiten kann.

Verwendbar sind auch Addukte von (Meth)-Acrylsäure an epoxidierte Diolefine wie z.B. 3,4-Epoxycyclohexylmethyl-3',4'-epoxycyclohexancarboxylat.

Besonders bevorzugt ist das Addukt von Acrylsäure an den Bisglycidylether von Bisphenol A.

Die Herstellung des Polyurethans A) kann nach üblichen Methoden, wie sie z.B. in der DE-A-34 37 918 beschrieben sind, erfolgen.

Bevorzugt wird zunächst in einem inerten, mit Wasser mischbaren Lösungsmittel, wie Aceton, Tetrahydrofuran, Methylethylketon oder N-Methylpyrrolidon aus den Komponenten a), b), h), gegebenenfalls c), e), g), h) und f), falls f) keine Aminogruppen enthält, eine Vorstufe mit noch endständigen Isocyanatgruppen hergestellt. Die Reaktionstemperatur liegt vorzugsweise bei 50 bis 100 ° C.

Zur Beschleunigung der Reaktion der Diisocyanate können die üblichen und bekannten Katalysatoren, wie Dibutylzinndilaurat, Zinn-II-octoat oder 1,4-Diazabicyclo-(2,2,2)-octan, mitverwendet sein.

Um eine unerwünschte, vorzeitige Polymerisation der ungesättigten Gruppen zu vermeiden, werden, vorteilhaft bereits bei der Herstellung des Polyurethans, Polymerisationsinhibitoren zugesetzt. Hierfür sind beispielsweise Chinone, Phenothiazin, Phenole oder Phenolderivate, wie p-Benzochinon, Hydrochinon, p-Methoxyphenol u.a. Verbindungen geeignet, wie sie z.B. beschrieben sind in "Encyclopedia of Polymer Science and Technology", Vol. 7, 1967, p. 644-664 Editors: Mark, Gaylord und Bikales, Interscience Publishers, Wiley + Sons, New York-London-Sydney.

Das so erhaltene Polyurethan kann gegebenenfalls nach (weiterer) Verdünnung mit Lösungsmitteln der oben genannten Art, bevorzugt niedrigsiedenden Lösungsmitteln mit Siedepunkten unter 100 ° C, bei einer Temperatur zwischen 20 und 80 ° C mit aminofunktionellen Produkten der Komponente f) und gegebenenfalls d) weiter umgesetzt werden.

Die Überführung potentieller Salzgruppen, z.B. Carboxylgruppen oder tertiärer Aminogruppen, welche über die Komponente f) in das Polyurethan eingeführt wurden, in die entsprechenden Ionen erfolgt durch Neutralisation mit Basen oder Säuren oder durch Quarternisierung der tertiären Aminogruppen vor oder nach dem Dispergieren der Lösung in Wasser.

Nachdem die Lösung in Wasser dispergiert worden ist, wird das organische Lösungsmittel abdestilliert.

Der Gewichtsanteil des Wassers in der Dispersion wird allgemeinen so bemessen, daß wäßrige Polyurethan-Dispersionen mit 10 bis 60 Gew.-%, vorzugsweise mit 20 bis 50 Gew.-% Feststoffgehalt erhalten werden.

Die erfindungsgemäße strahlungshärtbare wäßrige Bindemitteldispersion enthält neben der Komponenten (A) noch 5 bis 95 Gew.-%, bezogen auf die Gesamtmenge von (A), (B) und (C) eines in Wasser dispergierten Präpolymeren oder Präpolymerengemischs (B) mit einem Gehalt von 0,1 bis 1,0 mol polymerisierbarer ethylenisch ungesättigter Gruppen pro 100 g Präpolymer oder Präpolymerengemisch und einem Molekulargewicht von 300 bis 10 000 g/mol, wobei der K-Wert (gemessen bei 25 ° C in Dimethylformamid kleiner 40 ist.

Bevorzugt enthält das Präpolymer oder Präpolymerengemisch 0,1 bis 0,5 mol polymerisierbare ethylenisch ungesättigte Gruppen.

Das Molekulargewicht beträgt bevorzugt 300 bis 2000 g/mol. Der K-Wert ist bevorzugt kleiner als 30, besonders bevorzugt kleiner als 20.

Das Präpolymer oder Präpolymerengemisch ist als solches bei 20 ° C und Normaldruck in der Regel flüssig.

Bei Verwendung eines Präpolymerengemischs können auch Präpolymere eingesetzt werden, die bei 20 ° C und Normaldruck fest sind, solange das Präpolymerengemisch flüssig ist.

Bei Verwendung von flüssigen und festen Präpolymeren ist es nicht unbedingt notwendig, zunächst ein flüssiges Präpolymerengemisch herzustellen. Die einzelnen Präpolymeren können getrennt in Wasser dispergiert werden. Von Bedeutung ist lediglich, daß die Präpolymeren im Gemisch eine flüssige Phase ergeben und so gegenüber den nicht fließfähigen Polyurethanteilchen (A) beweglich sind. Dadurch wird erheblich zur Filmbildung und Ausbildung eines besseren Verbunds beigetragen.

Bei den Präpolymeren kann es sich um Polyester, Polyether, Polyepoxide, Polyurethane oder radikalisch polymerisierte Polymere oder Copolymere handeln, welche durch Umsetzung mit Verbindungen wie Acrylsäure oder Methacrylsäure polymerisierbare Kohlenstoffdoppelbindungen enthalten.

Folgende Präpolymere sind bevorzugt:

1. Bei den Polyestern handelt es sich bevorzugt um Polyester mit einer Säurezahl von höchstens 10, die aus (cyclo)aliphatischen $C_5$ bis $C_{12}$ bzw. $C_2$- bis $C_{12}$- und/oder aromatischen $C_5$-$C_{14}$-Dicarbonsäuren, wie Bernsteinsäure, Glutarsäure, Adipinsäure, Pimelinsäure, Korksäure, Azelainsäure, Sebacinsäure, Cyclohexandicarbonsäure, Phthalsäure, Isophthalsäure, Terephthalsäure, Maleinsäure, Fumarsäure, Itaconsäure bzw. deren Derivate, und vorzugsweise 2 bis 5-wertigen $C_2$-$C_{10}$-Alkoholen, wie Ethylenglykol, Polyethylenglykole, Propylenglykol, Polypropylenglykole, Butandiol, Hexandiol, Neopentylglykol, Hydroxypivalinsäureneopentylglykolester, Trimethylolpropan, Glycerin, Pentaerythrit sowie $\alpha,\beta$-ethylenisch ungesättigten Monocarbonsäuren, beispielsweise Acrylsäure, Methacrylsäure, Crotonsäure, Zimtsäure und/oder Dicarbonsäurehalbester von Monoalkoholen, wie Malein-, Fumar- und Itaconsäurehalbester mit $C_1$- bis $C_4$-Monoalkoholen, wobei Acrylsäure und Methacrylsäure bevorzugt sind, nach den üblichen Verfahren hergestellt werden können.

2. Bei den Polyethern handelt es sich bevorzugt um aliphatische Polyether, welche durch Umsetzung von zwei- oder mehrwertigen, insbesondere zwei- bis dreiwertigen $C_2$- bis $C_{10}$-Alkoholen mit Epoxiden z.B. Ethylenoxid oder Propylenoxid und ethylenisch ungesättigten Alkoholen, z.B. Allylalkohol, Methallylalkohol, Crotylalkohol, Hydroxygruppen enthaltenden (Meth-)acrylsäureestern oder bevorzugt ethylenisch ungesättigten Monocarbonsäuren, z.B. Acrylsäure oder Methacrylsäure erhalten werden.

3. Bei den Polyepoxiden handelt es sich bevorzugt um Polyepoxide mit durchschnittlich 2 bis 4, insbesondere 2 Epoxidgruppen pro Molekül, beispielsweise Polyglycidylether mehrwertiger Alkohole, wie sie auch unter 1) genannt sind,

Polyglycidylether mehrwertiger Phenole, wie Bisphenol A, Novolake, Glycidylester mehrwertiger Carbonsäuren, wie sie auch unter 1) genannt sind, andere Glycidylverbindungen, beispielsweise Triglycidylisocyanurat, welche mit ethylenisch ungesättigten Carbonsäuren wie sie auch unter 1) genannt sind insbesondere Acrylsäure und Methacrylsäure, umgesetzt sind.

4. Bei den Polyurethanen handelt es sich bevorzugt um ein gegebenenfalls Harnstoffgruppen enthaltendes Polyurethan, das aus $C_2$- bis $C_{10}$-aliphatischen und/oder $C_5$- bis $C_{20}$ aromatischen Polyisocyanaten, bevorzugt Diisocyanate beispielsweise Tetramethylendiisocyanat, Hexamethylendiisocyanat, Isophorondiisocyanat, Diphenylmethandiisocyanat, Toluylendiisocyanat, Naphthylendiisocyanat, 4,4'-Diphenyletherdiisocyanat, gegebenenfalls daraus hervorgehenden Di- oder Trimeren z.B. deren Isocyanurate, Biurete, Allophanate, sowie deren Umsetzungsprodukte, und wasserstoffaktiven Verbindungen, wie z.B. mehrwertigen Alkoholen, die unter 1) genannt sind, polyfunktionellen Aminen und/oder Aminoalkoholen, sowie hydroxylgruppenhaltigen $C_1$- bis $C_{12}$-Alkyl(meth-)acrylaten, wie Hydroxyethyl(meth-)acrylat, Hydroxypropyl-(meth-)acrylat und/oder Butandiolmono(meth-)acrylat, hergestellt werden kann. Die Summe der Grammäquivalente der gegenüber Isocyanat reaktiven Hydroxyl-und Aminogruppen beträgt, bezogen auf 1 Grammäquivalent Isocyanat, bevorzugt 0,95 bis 1,05.

5. Bei den radikalisch polymerisierten Polymeren oder Copolymeren handelt es sich bevorzugt Copolymere von Styrol, und/oder Acrylestern z.B. $C_1$-$C_{12}$-Alkyl(meth-)acrylaten, mit geringen Mengen funktionalisierten Monomeren, z.B. $C_1$-$C_8$-Hydroxyalkyl(meth-)acrylaten oder Glycidyl(meth)acrylat, (Meth)acrylsäure, Maleinsäureanhydrid, Isocyanatoethylacrylat, welche mit ethylenisch ungesättigten Verbindungen wie sie z.B. unter 1) oder voranstehend genannt sind, insbesondere aber Acrylsäure und Methacrylsäure, umgesetzt werden, und so einen Gehalt an polymerisierbaren Kohlenstoffdoppelbindungen aufweisen.

Besonders bevorzugt sind Polyester, Polyether und Polyepoxide. Die Präpolymeren können auch aminmodifiziert sein, z.B. durch Anlagerung von primären oder sekundären Aminen an Doppelbindungen (Michael-Addition). Die Komponente (B) kann zunächst in einem organischen Lösungsmittel oder Lösungsmittelgemisch, z.B. den bei der Herstellung der Komponenten (B) verwendeten Lösungsmitteln gelöst vorliegen. Geeignete organische Lösungsmittel sind z.B. Tetrahydrofuran, Dioxan, Aceton, Methylethylketon, Propanole, Butanole, Ethylacetat, Butylacetat, Methylenchlorid, Xylole oder Toluol ; bevorzugt sind Methylethylketon, Tetrahydrofuran, Isopropanol und Isobutanol. Die Lösung der Komponente (B) wird dann in Wasser dispergiert und die organischen Lösungsmittel abdestilliert. Komponente (B) kann auch direkt in Wasser dispergiert werden.

Im allgemeinen beträgt der Feststoffgehalt solcher wäßriger Dispersionen der Komponenten (B) 20 bis 80 Gew.-%.

Die Komponente (B) kann selbstdispergierbar sein, so daß kein Dispergierhilfsmittel (Schutzkolloid oder Emulgator) benötigt wird. Bevorzugt ist sie nicht selbst dispergierbar und wird mit Hilfe eines Schutzkolloids dispergiert. Dem Wasser wird daher bereits vor dem Dispergieren der Komponenten (B) bzw. der organischen Lösung der Komponenten (B) ein Schutzkolloid zugesetzt.

Das Schutzkolloid wird in diesem Fall im allgemeinen in Mengen von 0,1 bis 30, vorzugsweise 3 bis 12 Gew.-%, bezogen auf (B), eingesetzt. Es handelt sich dabei vorzugsweise um wasserlösliche hochmolekulare organische Verbindungen mit polaren Gruppen, wie z.B. Polyvinylpyrrolidon, Copolymerisate aus Vinylpropionat bzw. -acetat und Vinylpyrrolidon, teilverseifte Copolymerisate aus Acrylester und Acrylnitril, Polyvinylalkohole mit unterschiedlichem Restacetatgehalt, Cellulosether, Gelatine oder Mischungen dieser Stoffe. Besonders bevorzugte Schutzkolloide sind Polyvinylalkohol mit einem Restacetatgehalt von unter 35, insbesondere 5 bis 30 mol-% und/oder ein Vinylpyrrolidon-/Vinylpropionat-Copolymeres mit einem Vinylestergehalt von unter 35, insbesondere 5 bis 30 Gew.-%.

Außerdem können nichtionische, in besonderen Fällen auch ionische Emulgatoren verwendet werden. Bevorzugte Emulgatoren sind längerkettige Alkohole oder Phenole unterschiedlichen Eth- und/oder Propoxylierungsgrades (Addukte von 4-50 mol Ethylenoxid und/oder Propylenoxid). Besonders vorteilhaft sind Kombinationen der oben genannten Schutzkolloide mit derartigen Emulgatoren, da mit ihnen feinteiligere Dispersionen erhalten werden.

Die erfindungsgemäße Bindemitteldispersion enthält als Komponente (C) 0 bis 30 Gew.-%, bevorzugt 0,1 bis 10 Gew.-%, besonders bevorzugt 0,5 bis 10 Gew.-%, bezogen auf die Gesamtmenge von (A), (B) und (C) eines voranstehend genannten Schutzkolloids.

Zur Herstellung der erfindungsgemäßen strahlungshärtbaren Bindemitteldispersionen können die wäßrigen Dispersionen der Komponenten (A) und (B) gemischt werden.

Bevorzugt wird eine wäßrige Dispersion eines selbst dispergierbaren Polyurethans (A) mit der wäßrigen Dispersion eines Präpolymeren (B), welches mit Hilfe eines Schutzkolloids dispergiert ist, gemischt.

Bevorzugt enthält die erfindungsgemäße Bindemitteldispersion 19,9 bis 80 Gew.-%, besonders bevorzugt 40 bis 79,5 Gew.-%, bezogen auf die Gesamtmenge von (A), (B), und (C) der Komponenten (A).

Der Gewichtsanteil der Komponenten (B) beträgt dementsprechend bevorzugt 19,9 bis 80 Gew.-%, besonders bevorzugt 20 bis 59,5 Gew.-% bezogen auf die Gesamtmenge von (A), (B) und (C).

Der Feststoffgehalt der erfindungsgemäßen Bindemitteldispersion kann entsprechend der gewünschten Viskosität eingestellt werden. Im allgemeinen liegt der Feststoffgehalt zwischen 20 und 80, insbesondere zwischen 20 und 70 Gew.-%.

Die erfindungsgemäßen Dispersionen können weitere Zusätze, z.B. Pigmente, Farbstoffe, Füllstoffe und in der Lacktechnologie übliche Hilfsmittel enthalten.

Zur Strahlungshärtung durch UV-Licht werden den Dispersionen Photoinitiatoren zugesetzt.

Als Photoinitiatoren in Betracht kommen z.B. Benzophenon, Alkylbenzophenone, halogenmethylierte Benzophenone, Michlers Keton, Anthron und halogenierte Benzophenone. Ferner eignen sich Benzoin und seine Derivate. Ebenfalls wirksame Photoinitiatoren sind Anthrachinon und zahlreiche seiner Derivate, beispielsweise $\beta$-Methylanthrachinon, tert.-Butylanthrachinon und Anthrachinoncarbonsäureester und Acylphoshinoxide, z.B. Lucirin® TPO. Die Photoinitiatoren können auch an das Polymergerüst gebunden sein, z.B. durch Copolymerisation von mit Methacrylatgruppen funktionalisierten Photoinitiatoren.

Die Photoinitiatoren, die je nach Verwendungszweck der erfindungsgemäßen Massen in Mengen zwischen 0, 1 und 20 Gew.%, vorzugsweise, 0, 1 bis 5 Gew.%, bezogen auf die polymerisierbaren Komponenten, eingesetzt werden, können als einzelne Substanz oder, wegen häufiger vorteilhafter synergistischer Effekte, auch in Kombination miteinander verwendet werden.

Vorteilhafte Zusätze, die zu einer weiteren Steigerung der Reaktivität führen können, sind bestimmte tert. Amine wie z.B. Triethylamin und Triethanolamin. Auch sie können in Mengen bis zu 5 Gew.%, bezogen auf die polymerisierbaren Komponenten, eingesetzt werden.

Zu erwähnen ist abschließend noch, daß die erfindungsgemäßen Dispersionen auch thermisch vernetzt werden können. Hierbei ist der Zusatz von Initiatoren, die bei erhöhten Temperaturen Radikale bilden notwendig. Verwendbar sind z.B. Dibenzoylperoxid, Cumolhydroperoxid oder Azodiisobuttersäuredinitril. Weitere Beispiele für geeignete Initiatoren sind in "Polymer Handbook", 2. Ausgabe, Wiley & Sons, New York beschrieben.

Die erfindungsgemäßen Dispersionen können für die Herstellung von Beschichtungen verwendet werden.

Sie können z.B. durch Spritzen, Gießen, Drukken oder Rakeln auf Substrate wie Metall, Kunststoff, Glas, Holz, Papier, Pappe, Leder oder Textil aufgebracht werden.

Bei der Strahlungshärtung werden die überzüge im allgemeinen bis zu 30 min bei Temperaturen bis 100°C vorgeheizt und anschließend kurzzeitig einer UV- oder energiereichen Elektronenstrahlung ausgesetzt. Hierzu werden die üblicherweise für die Härtung von überzügen eingesetzten UV- bzw. Elektronenstrahlungsquellen verwendet.

Bei porösen Substraten, wie beispielsweise Leder, Papier, Holz, sind nur sehr kurze Vorheizzeiten erforderlich, da die Hauptmenge des Wassers vom Untergrund aufgenommen wird; bisweilen kann auf ein Vorheizen ganz verzichtet werden.

Die Beschichtungen weisen gleichzeitig bei sehr guten elastischen Eigenschaften eine große Härte auf.

Auch die Haftung der Beschichtungen und Chemikalienbeständigkeit ist sehr gut.

Beispiel 1

Polyurethandispersion $a_1$):

200 Gew.-Teile eines Polyesters aus Adipinsäure, Isophthalsäure (Molverhältnis 1 : 1) und 1,6 Hexandiol (OH = Zahl 112), 43 Gew.-Teile 1,4-Butandiol, 60 Gew.-Teile Bisphenol-A-diglycidetheracrylat (Addukt von 2 mol Acrylsäure an Bisphenol-A-diglycidether, 53 Teile Dimethylolpropionsäure und 100 Teile N-Methylpyrrolidon wurden bei 70°C im Vakuum entwässert und mit 322 Gew.-Teile Isophorondiisocyanat bei 90°C bis zu einem NCO-Gehalt von 2,75 Gew.-% umgesetzt. Nach Verdünnen mit 800 Gew.-Teilen Aceton wurden 32 Gew.-Teile Dimethylethanolamin zugesetzt und die Lösung in 1500 Gew.-Teilen Wasser innerhalb von 10 min dispergiert. Nach 5 min wurden 21 teile Isophorondiamin und 9 Gew.-Teile Diethylentriamin in 140 Gew.-Teile Wasser zugegeben. Aceton wurde abdestilliert. Ein Teil der Dispersion wurde bei Raumtemperatur getrocknet, wobei ein Film entstand, der in Dimethylformamid unlöslich war.

Präpolymerdispersion b):

18 Gew.-% Bisphenol-A-diglycidetheracrylat
27 Gew.-% eines alkoxylierten Trimethylolpropanacrylats (MG: 500 g/mol; 100 Pas bei 23°C, Laromer® LR8748 BASF AG)
5 Gew.-% Polymerisat aus N-Vinylpyrrolidon und Vinylpropionat im Gewichtsverhältnis 66 : 34.

50 Gew-% Wasser
117 g der Polyurethandispersion wurden mit 30 g der Präpolymerdispersionen gemischt, 2 g eines Photoinitiators Benzophenon/1-Hydroxycyclohexylphenylketon (Irgacure® 500, der Ciba-Geigy AG, zugesetzt und der Feststoffgehalt der Dispersion mit Wasser auf 30 Gew.-% eingestellt. Das Gewichtsverhältnis Polyurethan/Präpolymer betrug 70 : 30.

Die Dispersion wurde auf halbmattem Kunstdruckpapier (KD-Papier) aufgetragen, bei 40 °C 20 min getrocknet und unter einer Quecksilberhochdrucklampe (120 Watt/cm) im Abstand von 10 cm auf einem Band vorbeigeführt. Eine 8 µm-Schicht konnte bei einer Bandgeschwindigkeit größer 78 m/min gegenüber einem Fingernagel kratzfest gehärtet werden.

Eine 40 µm-Schicht auf Glas hatte nach 2 maligem Belichten mit einer Bandgeschwindigkeit von 10 m/min einen Pendeldämpfungswert (DIN 53157) von 115 s. Die Erichsentiefung (DIN 53156) einer 20 µm dicken bei einer 2 mal mit einer Bandgeschwindigkeit von 10 m/min gehärteten Schicht auf Bonderblech 132 betrug 9,8 mm. Die Haftung dieser Schicht mit und ohne Gitterschnitt, die Chemikalienbeständigkeit (DIN 68860 B), Glätte und Schleifbarkeit waren sehr gut.

Beispiel 2

Polyurethandispersion $a_2$):

200 Gew.-Teile eines Polyesters aus Adipinsäure, Isophthalsäure (Molverhältnis 1 : 1) und 1,6-Hexandiol (OHZ 112), 80 Gew.-Teile 1,4-Butandiol, 60 Gew.-Teile Bisphenol-A-diglycidetheracrylat, 54 Gew.-Teile Dimethylolpropionsäure, 0,1 Gew.-Teile p-Methoxyphenol und 100 Gew.-Teile N-Methylpyrrolidon wurden bei 70 °C im Vakuum entwässert und mit 411 Gew.-Teilen Isophorondiisocyanat bei 90 °C bis zu einem NCO-Gehalt von 2,34Gew.-% umgesetzt. Nach Verdünnen mit 800 Gew.-Teilen Aceton wurden 28 Gew.-Teile Dimethylethanolamin zugesetzt und die Lösung innerhalb von 10 min in 1000 Gew.-Teilen Wasser dispergiert. Nach 5 min wurden 21 Gew.-Teile Isophorondiamin und 9 Gew.-teile Diethylentriamin in 40 Gew.-Teile Wasser zugegeben. Aceton wurde abdestilliert. Das Polyurethan war in Dimethylformamid unlöslich.

Analog Beispiel 1 wurden aus $a_2$ und b) eine Dispersion mit einem Feststoffgehalt von 30 Gew.-% hergestellt, wobei das Gewichtsverhältnis des Polyurethans zum Präpolymeren 70:30 betrug.

Die Fingernagelkratzfestigkeit wurde bei 45 m/min erreicht. Die Pendeldämpfung betrug 105 s, die Erichsentiefung über 10 mm. Haftung, Chemikalienbeständigkeit und Glätte waren sehr gut.

Vergleichsbeispiel

Der Feststoffgehalt der Präpolymerdispersion b) wurde auf 30 Gew.-% eingestellt. Die Fingernagelkratzfestigkeit wurde bei 10 m/min erreicht.

Der Pendeldämpfungswert betrug 130 s und die Erichsentiefung nur 3 mm. Die Chemikalienbeständigkeiten waren sehr gut, allerdings war die Haftung nur befriedigend.

Beispiel 3

Polyurethandispersion $a_3$):

386,8 Gew.-Teile eines Polyesterdiols aus Isophthalsäure/Adipinsäure/Hexandiol MG 2000 wurden mit 53,6 Gew.-Teile Dimethylolpropionsäure, 90,1 Gew.-Teile 1,4-Butandiol und 170 Gew.-Teile Methylethylketon auf 50 °C erhitzt. Es wurden 383,8 Gew.-Teile Isophorondiisocyanat und 3 Gew.-Teile Dibutylzinndilaurat zugegeben und 8h auf 90 °C erhitzt. Es wurde mit 600 Gew.-Teile Aceton verdünnt und auf 30 °C abgekühlt, der NCO-Wert betrug 67 %. Dann wurde mit 28,5 Gew.-Teile Dimethylethanolamin neutralisiert. Es wurden 17,8 Gew.-Teile der Lösung eines stöchiometrischen Reaktionsproduktes von Hexamethylendiisocyanatisocyananurat und Butanonoxim in Aceton 65 %ig) zugegeben. Anschließend wurden 2000 Gew.-Teile Wasser eingeleitet und es entstand eine feinteilige Dispersion, die bei 80 mbar bis 40 °C Innentemperatur vom organischen Lösungsmittel befreit wurde. Der K-Wert betrug 51,6.

Analog Beispiel 1 wurden aus $a_3$ und b) eine Dispersion mit einem Feststoffgehalt von 30 Gew.-% hergestellt, wobei das Gewichtsverhältnis des Polyurethans zum Präpolymeren 50:50 betrug.

Die Fingernagelkratzfestigkeit wurde bei 80 m/min erreicht. Die Pendeldämpfung betrug 160 s, die Erichsentiefung 9,2 mm. Haftung, Chemikalienbeständigkeit und Glätte waren sehr gut.

Beispiel 4

Polyurethandispersion $a_4$)

Zu einer Vorlage wie bei $a_3$) beschrieben, wurden 383,8 Gew.-Teile Isophoprondiisocyanat und 3 Gew.-Teile Dibutylzinndilaurat zugegeben. Die Reaktionszeit betrug bei 90 °C 6h 30 min. Nach Verdünnen mit 600 Gew.-Teile Aceton betrug der NCO-Wert 57 %. Es wurde mit 28,5 Gew.-Teile Dimethylethanolamin neutralisiert und mit 2100 Gew.-Teile Wasser dispergiert. Die organischen Lösungsmittel wurden bei 90 mbar und Temperaturen bis 40 °C abdestilliert. Der K-Wert betrug 51,2.

Analog Beispiel 1 wurden aus $a_4$ und b) eine Dispersion mit einem Feststoffgehalt von 30 Gew.-

% hergestellt, wobei das Gewichtsverhältnis des Polyurethans zum Präpolymeren 50:50 betrug.

Die Fingernagelkratzfestigkeit wurde bei 80 m/min erreicht. Die Pendeldämpfung betrug 124 s, die Erichsentiefung 8,5 mm. Haftung, Chemikalienbeständigkeit und Glätte waren sehr gut.

**Patentansprüche**

**1.** Strahlungshärtbare, wäßrige Bindemitteldispersionen, enthaltend
(A) 5 bis 95 Gew.-%, bezogen auf die Gesamtmenge der Komponenten (A), (B) und (C), eines in Wasser dispergierten Polyurethans, welches einen K-Wert größer 40 (gemessen in Dimethylformamid) hat oder in Dimethylformamid nicht löslich ist und einen Gehalt an polymerisierbaren ethylenisch ungesättigten Gruppen von maximal 0,2 mol pro 100 g Polyurethan aufweist, und
(B) 5 bis 95 Gew.-%, bezogen auf die Gesamtmenge der Komponenten (A), (B) und (C), eines in Wasser dispergierten Präpolymeren oder Präpolymerengemischs mit einem Gehalt von 0,1 bis 1,0 mol polymerisierbarer ethylenisch ungesättigter Gruppen pro 100 g Präpolymer oder Präpolymerengemisch und einem Molekulargewicht von 300 bis 10 000, wobei der K-Wert (gemessen in Dimethylformamid) kleiner 40 ist, und
(C) 0 bis 30 Gew.-%, bezogen auf die Gesamtmenge der Komponenten (A), (B) und (C), eines Schutzkolloids.

**2.** Verfahren zur Herstellung von Bindemitteldispersionen gemäß Anspruch 1, dadurch gekennzeichnet, daß eine wäßrige Dispersion eines selbstdispergierbaren Polyurethans (A) mit der wäßrigen Dispersion eines Präpolymeren (B), welches mit Hilfe eines Schutzkolloids dispergiert vorliegt, gemischt wird.

**3.** Verwendung von wäßrigen Bindemitteldispersionen gemäß Anspruch 1 zur Herstellung von Beschichtungen, die durch Bestrahlen mit energiereicher Strahlung gehärtet werden.

**4.** Beschichtete Substrate, erhältlich unter Verwendung einer Bindemitteldispersion gemäß Anspruch 1.

Europäisches Patentamt

# EUROPÄISCHER RECHERCHENBERICHT

Nummer der Anmeldung

EP 91116394.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | DATABSE WPI, Nr. 80-11 725, DERWENT PUBLICATIONS LTD., London, GB * Zusammenfassung * & JP-A-55-000 717 (TEIJ) 07-01-1980 -- | 1,3,4 | C 09 D 175/14<br>C 08 F 2/46 |
| A | US - A - 4 720 529 (KIMURA et al.) * Ansprüche; Spalte 6, Zeile 30 - Spalte 7, Zeile 13 * ---- | 1,3,4 | |

RECHERCHIERTE SACHGEBIETE (Int. Cl.⁵)

C 09 D 175/00
C 08 F 2/00

Der vorliegende Recherchenbericht wurde für alle Patentansprüche erstellt.

| Recherchenort | Abschlußdatum der Recherche | Prüfer |
|---|---|---|
| WIEN | 09-01-1992 | PAMMINGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument